# EUROPEAN PATENT SPECIFICATION

(11) **EP 1 914 058 B1**
(45) Date of publication and mention of the grant of the patent: **16.05.2012**
(21) Application number: 07118266.1
(22) Date of filing: 11.10.2007
(51) Int. Cl.: B29C 44/12, B62D 29/04, B62D 33/00, B62D 65/02

(54) **Method of manufacture of a structural shell of an economical car**
Verfahren zur Herstellung einer Karrosserie für ein ökonomisches Automobil
Pocédé de fabrication d'une coque structurelle d'une voiture économique

(30) Priority: 16.10.2006 FR 0609033
(43) Date of publication of application: 23.04.2008
(73) Proprietor: MDI Motor Development International S.A., 1212 Luxembourg (LU)
(72) Inventor: Negre, Guy, 06270, VILLENEUVE LOUBET (FR); Negre, Cyril, CARROS Cedex, 06516 (FR)
(74) Representative: Kohn, Philippe

(56) References cited:
- WO-A-03/080308
- DE-A1- 1 480 603
- DE-A1- 4 243 186
- FR-A- 2 063 765
- FR-A1- 2 521 939
- GB-A- 2 311 966
- JP-A- 1 032 981
- JP-A- 2000 219 050

## Description

The invention relates to the manufacturing concept for an economical car.

The invention concerns the manufacture of a car operating with a variable volume active chamber engine producing work and using in particular compressed air as working gas and an integral (or non-integral) compression device and being able to operate in mono-energy mode with fuel or compressed air or in dual-energy mode with fuel and compressed air simultaneously or successively.

The inventors have filed many patents relating to engine designs and their installation, using compressed air for a totally clean operation of a motor vehicle in urban and suburban areas, among which the following International patent applications:
WO 96/27737 WO 97/00655 WO 97/39232 WO 97/48884 WO 98/12062
WO 98/15440 WO 98/32963 WO 99/37885 WO 01/69080 WO 03/036088

One of the main difficulties for fitting this type of engine to a vehicle resides in accommodating the particularly voluminous stock of air to be incorporated in a chassis of a conventional car.

The inventors have also filed the international patent application WO 02/34610 relating to a motor vehicle chassis with a central load-bearing structure made of aluminium.

The inventor have also filed the international patent application WO 03/080308 relating to an improved mould for the production of parts made of composite materials, moulding lines and a moulding plant including such lines, for the manufacture of parts, in particular car body parts, made of composite materials including two laminated skins between which is positioned a polyurethane foam core.

This type of manufacturing process, used in particular in the manufacture of sailboards, makes it possible to produce very light and very stiff products in a single piece.

In the car manufacturing industry, the use of glass fibre and resin composite in the field of vehicle manufacture is known. However, the majority of the known uses with these materials relate to single-skin elements which are positioned and mounted on metal structures forming the body, with the exception of certain attached body elements, such as bonnet or boot lid which have been produced as a double skin containing a core of light material such as polyurethane foam.

It is also known from DE-A-480.603 a structural shell of an economical car using parts made of composite materials, the structural shell being made of two main elements of which the mating surfaces are horizontal thus defining a lower half-shell and an upper half-shell, each of these two half-shells being designed to be mouldable and demouldable, in a suitable mould, and being then assembled along their mating surfaces to constitute the structural shell of the vehicle.

The use of composites in the field of the motor industry is hindered by production rates which are slow in order to allow the resin to polymerize after it is injected into the mould.

These production times of the order of 30 to 35 minutes are not suitable for the mass production of cars at the rate of one car per minute, or even less. The solution which consists in multiplying the number of moulds to increase the rates soon reaches its limit due to the space and complexity required.

To solve this problem and the inventors have proposed and described in many company documents, a production concept in which the car is manufactured at its point of sale in small semi-skilled production units near the local trading centre. The slow production rate multiplied by the number of points of manufacture which are also points of sale is then compatible with mass production.

According to document GB-A-2.311.966, it is proposed a method of manufacture of a structural shell of an economical car using parts made of composite materials, according to the preamble of claim 1.

An economical car can thus be made of two half-shells which close like a particularly stiff box, requiring almost no attached body parts.

It is known from document FR-A-2,521,939 a method according to which the structural shell is a monobloc element made of to sheets between which is positioned a foam. The roof, which is not an element of the structural shell is a part of the vehicle body.

Document JP-A-2000/219050 proposes to provide a cylinder mounting structure capable of requiring less protrusion into a vehicle, but this structure does not permit to save space in passenger compartment, the cylinder being placed under the floor panel which is consequently higher.

The object of the invention concerns an improvement the method known from GB-A-2.311.966 for the purpose of integrating several arrangements in connection with the engine equipping the car, especially in connection with an engine design and its installation, using compressed air for a totally clean operation of a motor vehicle in urban and suburban areas.

To this end, the invention proposes a method of the above type and according to the characterizing portion of claim 1.

The exhaust system of compressed air engines works at particularly cold temperatures, often lower than zero degree centigrade and, due to the density of the air, the exhaust silencers require large expansion chambers in order to be efficient. According to the invention, a chamber including baffle plates which form one or more reinforcing ribs is arranged in the lower portion of the lower half-shell, also obtained by demoulding, constituting an integral exhaust silencer. The simple attached plate, including an outlet pipe to the atmosphere for the exhaust gases, closes this space which receives sound-deadening padding such as cellular foam or other acoustic device for the attenuation of the noise volume.

Advantageously a convertible economical car is produced by using only the lower half-shell, the upper half-shell being the windscreen frame and the pillars. This convertible model can also receive a detachable hard top.

Advantageously, at least the front seats of the car (seat cushion and backrest) are produced moulded in one piece integral with the lower half-shell, and the compartment and the means of mounting for at least one compressed air or gas tank are located positioned transversely under the seats.

If the front seats are moulded with the lower portion of the body, the pedal assembly for the accelerator, brake and if necessary the clutch of the vehicle is fitted with a means of adjustment, forward or backward, for adjusting to the sizes of various drivers. The same applies to the steering wheel and the steering column which are fitted with means of adjustment enabling their adjustment to the size of the driver.

The structural shell thus formed is positioned and mounted on a single mechanical assembly carrying the mechanical components, suspension components, running gear components, engine components and transmission components of the car.

According to one variant of the invention, inserts are positioned directly in the shell to enable the mounting of the mechanical components.

The use of the double skin with polyurethane core technique makes it possible to produce a car which is extremely stiff and light and which absorbs impacts well.

The material of the fibres or fabric used: glass, "KEVLAR", carbon, plant fibres, hemp, sisal, or other, and the resins used - polyester, epoxy, even plant resins currently being studied in some laboratories - for the production of the structural shell according to the inventive method without changing the principle of it.

The parting line (or plan), or mating surfaces of the two half-shells, lower and upper, can be straight or broken depending on the required shapes. The method for attaching the two structural shells to each other - gluing, riveting, screwing - can vary without changing the principle of the invention described.

Other aims and advantages of the invention will emerge from the reading of the non-limiting following description of several embodiments, with reference to the annexed drawings, in which:
Figure 1 illustrates in longitudinal section two main elements of a shell of a car;
Figure 2 illustrates in longitudinal section the complete shell of the car after assembly of the two elements in Figure 1; and
Figure 3 illustrates in longitudinal section the lower shell of a car including front seats, a high pressure compressed air tank and an exhaust space, shell manufactured according to the invention.

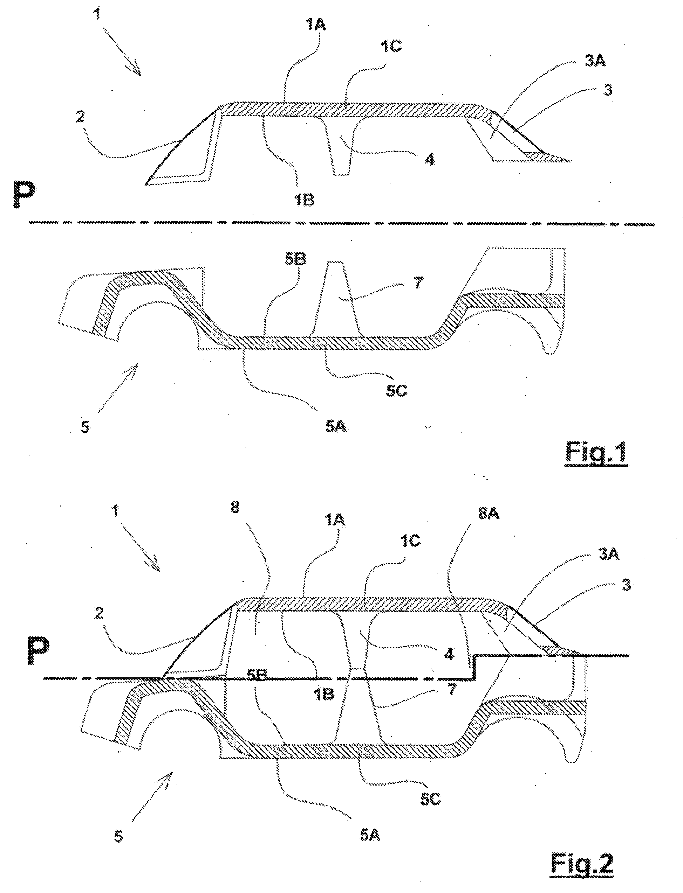

Figure 1 illustrates in longitudinal section the two structural half-shells 1 and 5. The upper half-shell 1 is produced by a double skin moulding technique, the outer skin 1A and the inner skin 1B, with a polyurethane foam core 1C between the two skins.

This upper half shell comprises the windscreen frame 2, the aperture for the rear window 3, the rear post 3A, and one half centre pillar 4 seen in elevation.

The lower half-shell 5 is also produced by a double skin moulding technique with its outer skin 5A and its inner skin 5B and the polyurethane foam 5C between the two skins.

This lower half-shell 5 includes the floor 6, the front bonnet and one half centre pillar 7.

Figure 2 shows the two half-shells assembled (for example by gluing) along the horizontal mating surfaces or mating plan P. The apertures for the front and rear doors 8 and 8A thus obtained as it can be seen.

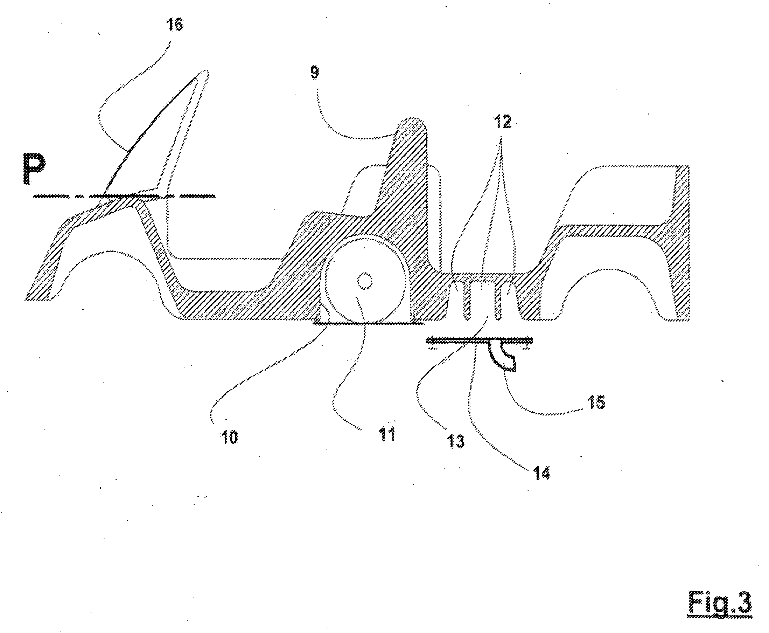

Figure 3 illustrates in longitudinal section a lower half-shell according to the invention of a convertible economical car fitted with a compressed air engine, moulded with an inner and an outer "double" skin and including, also obtained by moulding, the front seats 9 and, under the seating portion, or cushion, of the said seats, a compartment 10 for a high-pressure compressed air, or gas, storage tank 11.

A space 12 reinforced with baffle plate ribs 13 provides a large chamber serving as an exhaust silencer thus incorporated in the shell. The exhaust space 12 is closed by a simple plate, here screwed on and including the outlet to the atmosphere for the exhaust 15.

A windscreen frame 16 is here the only upper element of the structural shell.

The provision according to the invention of the compartment, and possibly of the exhaust components, does concern any type of vehicle manufactured according to the invention.

The invention is not limited to the examples of embodiments described and illustrated: the materials, the means of mounting the two half-shells, and the devices described can vary as far as equivalents allow, to produce the same results, and the number of doors and the design of the car can vary, without changing the invention as defined by the attached claims.

## Claims

1. Method of manufacture of a structural shell of an economical car using parts made of composite materials,
wherein:
the structural shell is made of two main elements (1, 5) of which the mating surfaces are horizontal and pass generally level with the base of the windscreen (2) thus defining a lower half-shell comprising the floor (7) and an upper half-shell;
each of these two half-shells is designed to be mouldable and demouldable, in a suitable mould, in composite materials according to the technique with two laminated skins between which is positioned a polyurethane foam core;
these two half-shells are then assembled along their mating surfaces to constitute the structural shell of the vehicle;
at least the front seats (9) are produced moulded in one piece with the lower half-shell;
**characterized in that**:
- under the seating portion of the said front seats (9), is arranged a compartment (10) for accommodating at least one high pressure compressed air, or gas, tank (11);
- a space (12) is arranged in the lower portion of the lower half-shell, said space being obtained by demoulding, including one or more reinforcing rib(s) (13), and constituting an integral exhaust silencer;
- and an attached plate (14), including an outlet pipe (15) to the atmosphere for the exhaust gases, closes the integral exhaust silencer which receives sound-deadening padding.

2. Method of manufacture of an economical car structural shell according to Claim 1, **characterized in that** a convertible type of car is constituted by using the lower half-shell of the shell, the upper half-shell being the windscreen frame (2) and the windscreen pillars.

3. Method of manufacture of an economical car structural shell according to Claim 1, **characterized in that**, the front seats being fixed, the pedal assembly for the accelerator, brake and if necessary the clutch includes an adjustment device,forward or backward, for adjusting to the size of the driver.

4. Method of manufacture of an economical car structural shell according to Claim 1, **characterized in that**, the front seats being fixed, the steering wheel and the steering column include means of adjustment for adjusting to the size of the driver.

5. Method of manufacture of an economical car structural shell according to Claim 1, **characterized in that**:
- the lower half-shell comprises the floor, the front and rear bulkheads, and the lower half of the centre pillar (7); and
- the upper half-shell comprises the windscreen frame (2), the upper half of the centre pillar (4), the centre (4) and rear (3A) posts and a roof of the vehicle (1A, 1B, 1 C).

6. Method of manufacture of an economical car structural shell according to Claim 1, **characterized in that** the shapes and the exterior design of the car are obtained directly by moulding of each of the lower and upper shells.

7. Method of manufacture of an economical car structural shell according to Claim 1, **characterized in that** means of mounting of at least one high-pressure compressed air, or gas, tank (11) are arranged under the seating portion of the said front seats (9).

## Patentansprüche

1. Verfahren zur Herstellung einer Karosserie für ein ökonomisches Automobil unter Verwendung von Teilen aus Verbundwerkstoffen,
wobei:
die Karosserie aus zwei Hauptelementen (1, 5) hergestellt wird, deren Passflächen horizontal sind und allgemein auf einer Ebene mit der Unterkante der Windschutzscheibe (2) verlaufen, wodurch eine untere Karosseriehälfte mit dem Boden (7) und eine obere Karosseriehälfte definiert werden;
jede dieser zwei Karosseriehälften so ausgelegt ist, dass sie in Verbundwerkstoffen nach dem Verfahren mit zwei geschichteten Schalen mit einem dazwischen eingelegten Kern aus Polyurethanschaum in einem geeigneten Formwerkzeug formbar und entformbar ist;
diese zwei Karosseriehälften dann entlang ihren Passflächen zusammengebaut werden, um die Karosserie des Fahrzeugs zu bilden;
mindestens die Vordersitze (9) in einem Stück mit der unteren Karosseriehälfte geformt hergestellt werden;
**dadurch gekennzeichnet, dass**:
unter dem Sitzteil der Vordersitze (9) ein Abteil (10) zum Aufnehmen mindestens eines Behälters (11) für unter hohem Druck komprimierte Luft oder Gas angeordnet ist;
im unteren Teil der unteren Karosseriehälfte ein Raum (12) angeordnet ist, wobei der Raum durch Entformen erhalten wird, eine oder mehr Verstärkungsrippe(n) (13) besitzt und einen integrierten Abgasschalldämpfer bildet;
und eine angebaute Platte (14), die ein Austrittsrohr (15) für die Abgase in die Atmosphäre besitzt, den integrierten Abgasschalldämpfer, der mit einer schalldämmenden Auskleidung versehen wird, schließt.

2. Verfahren zur Herstellung einer Karosserie für ein ökonomisches Automobil nach Anspruch 1, **dadurch gekennzeichnet, dass** ein Automobil in Cabrioletausführung unter Verwendung der unteren Karosseriehälfte gebildet wird, wobei die obere Karosseriehälfte den Windschutzscheibenrahmen (2) und die Windschutzscheibenpfosten darstellt.

3. Verfahren zur Herstellung einer Karosserie für ein ökonomisches Automobil nach Anspruch 1, **dadurch gekennzeichnet, dass**, während die Vordersitze fixiert sind, die Pedalanordnung für Gas, Bremse und, wenn nötig, Kupplung eine Vorwärts- oder Rückwärtsverstellvorrichtung zum Anpassen an die Größe des Fahrers besitzt.

4. Verfahren zur Herstellung einer Karosserie für ein ökonomisches Automobil nach Anspruch 1, **dadurch gekennzeichnet, dass**, während die Vordersitze fixiert sind, das Lenkrad und die Lenksäule Verstelleinrichtungen zum Anpassen an die Größe des Fahrers besitzen.

5. Verfahren zur Herstellung einer Karosserie für ein ökonomisches Automobil nach Anspruch 1, **dadurch gekennzeichnet, dass**:
die untere Karosseriehälfte den Boden, die vordere und die hintere Spritzwand und die untere Hälfte des Mittelpfostens (7) aufweist; und
die obere Karosseriehälfte den Windschutzscheibenrahmen (2), die obere Hälfte des Mittelpfostens (4), die mittlere (4) und die hintere (3A) Säule und das Dach des Fahrzeugs (1A, 1B, 1C) aufweist.

6. Verfahren zur Herstellung einer Karosserie für ein ökonomisches Automobil nach Anspruch 1, **dadurch gekennzeichnet, dass** die Formen und die äußere Gestalt des Automobils direkt durch das Formen jeweils der unteren und der oberen Karosserie erhalten werden.

7. Verfahren zur Herstellung einer Karosserie für ein ökonomisches Automobil nach Anspruch 1, **dadurch gekennzeichnet, dass** Einrichtungen zum Montieren mindestens eines Behälters (11) für unter hohem Druck komprimierte Luft oder Gas unter dem Sitzteil der Vordersitze (9) angeordnet sind.

## Revendications

1. Procédé de fabrication d'une coque structurelle d'une voiture économique utilisant des pièces en matériaux composites,
dans lequel :
la coque structurelle est constituée de deux éléments principaux (1,5) dont le plan de joint est horizontal et passe sensiblement à hauteur du bas du pare-brise (2) en délimitant ainsi une demi-coque inférieure comprenant le plancher (7) et une demi-coque supérieure comprenant le toit du véhicule (1A,1B,1C) ;
chacune de ces deux demi-coques est conçue pour être moulable et démoulable, dans un moule adapté, en matériaux composites selon la technique à deux peaux stratifiées entre lesquelles est positionné un noyau en mousse de polyuréthane ;
ces deux demi-coques sont ensuite assemblées selon le plan de joint pour constituer la coque structurelle du véhicule ;
au moins les sièges (9) avant sont réalisés venus de moulage avec la demi-coque inférieure ;
**caractérisé en ce que** :
- sous l'assise desdits sièges avant (9), est ménagé un logement (10) d'au moins un réservoir haute pression d'air ou de gaz comprimé (11) ;
- dans la partie inférieure de la demi-coque inférieure est ménagée une capacité (12), venant de démoulage, comportant une ou plusieurs nervure(s) (13) de renfort, et qui constitue un silencieux d'échappement intégré ;
- une plaque rapportée (14) comportant un tuyau de sortie (15) à l'atmosphère des gaz d'échappement, permet de fermer le silencieux d'échappement intégré qui reçoit des garnitures anti-bruit.

2. Procédé de fabrication d'une coque structurelle de voiture économique selon la revendication 1 **caractérisé en ce qu'**une voiture de type découvrable est constituée par la seule utilisation de la demi-coque inférieure de la coque, la demi-coque supérieure étant la baie de parebrise (2) et les montants de pare-brise.

3. Procédé de fabrication d'une coque structurelle de voiture économique selon la revendication 1, **caractérisé en ce que**, les sièges avant étant fixes, le pédalier d'accélérateur, de frein et éventuellement d'embrayage comporte un dispositif de réglage en avant ou en arrière pour permettre de s'adapter à la taille du conducteur.

4. Procédé de fabrication d'une coque structurelle de coque structurelle de voiture économique selon la revendication 1, **caractérisé en ce que**, les sièges avant étant fixes, le volant et la colonne de direction comportent des moyens de réglages permettant de s'adapter à la taille du conducteur.

5. Procédé de fabrication d'une coque structurelle d'une voiture économique selon la revendication 1, **caractérisé en ce que** :
- la demi-coque inférieure comprend le plancher, les tabliers avant et arrière, la moitié inférieuredu pied milieu (7), et
- la demi-coque supérieure comprend la baie de pare-brise (2), la moitié supérieure du pied milieu (4), les montants centraux (4) et arrière (3A) et le toit du véhicule (1A,1B,1C).

6. Procédé de fabrication d'une coque structurelle d'une voiture économique selon la revendication 1, **caractérisé en ce que en ce que** les formes et le design extérieur de la voiture sont obtenus directement par moulage de chacune des coques inférieure et supérieure.

7. Procédé de fabrication d'une coque structurelle d'une voiture économique selon la revendication 1, **caractérisé en ce que** les moyens de fixation d'au moins un réservoir haute pression d'air ou de gaz comprimé (11) sont ménagés sous l'assise desdits sièges avant (9).
